(19) Europäisches Patentamt
European Patent Office
Office européen des brevets

(11) EP 4 663 276 A1

(12) **EUROPEAN PATENT APPLICATION**
published in accordance with Art. 153(4) EPC

(43) Date of publication:
**17.12.2025 Bulletin 2025/51**

(21) Application number: **24753118.9**

(22) Date of filing: **23.01.2024**

(51) International Patent Classification (IPC):
***B01D 53/14*** *(2006.01)* ***B01D 53/62*** *(2006.01)*
***C01B 32/50*** *(2017.01)*

(52) Cooperative Patent Classification (CPC):
**B01D 53/14; B01D 53/62; C01B 32/50**

(86) International application number:
**PCT/JP2024/001803**

(87) International publication number:
**WO 2024/166673 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.02.2023 JP 2023018343**

(71) Applicants:
- **The University of Tokyo**
  **Bunkyo-ku, Tokyo 113-8654 (JP)**
- **Nippon Shokubai Co., Ltd.**
  **Osaka-shi, Osaka 541-0043 (JP)**

(72) Inventors:
- **NOGUCHI, Takafumi**
  **Tokyo 113-8654 (JP)**
- **MARUYAMA, Ippei**
  **Tokyo 113-8654 (JP)**
- **TAKAYAMA, Takeshi**
  **Suita-shi, Osaka 564-0034 (JP)**
- **ARAI, Taichiro**
  **Suita-shi, Osaka 564-0034 (JP)**
- **MAEMOTO, Rie**
  **Suita-shi, Osaka 564-0034 (JP)**

(74) Representative: **Cabinet Beau de Loménie**
**103, rue de Grenelle / CS 90800**
**75340 Paris Cedex 07 (FR)**

(54) **CARBON DIOXIDE FIXATION COMPOSITION**

(57) The present invention aims to provide a carbon dioxide fixation composition capable of improving the amount and speed of carbon dioxide fixation. The present invention relates to a carbon dioxide fixation composition containing: a powder containing a calcium-containing compound; and a polyamine.

EP 4 663 276 A1

## Description

### TECHNICAL FIELD

The present invention relates to carbon dioxide fixation compositions. More specifically, it relates to carbon dioxide fixation compositions effectively reducing $CO_2$ emissions in the cement industry.

### BACKGROUND ART

The cement industry accounts for about 8% of the $CO_2$ emissions from all industries. Thus, reducing $CO_2$ emissions from the cement industry significantly matters.

As one of the main strategies for reducing $CO_2$ emissions, technology is being developed. This technology re-fixes $CO_2$ emitted during production of cement as calcium carbonate by utilizing calcium components contained in ready-mixed concrete, returned concrete, and waste concrete.

For example, Patent Literature 1 discloses a method for fixing carbon dioxide. This method features: bringing carbon dioxide into contact with an aqueous solution of monoethanolamine; and adding a calcium salt or an aqueous solution of a calcium salt to the solution of monoethanolamine to generate calcium carbonate in the solution thereby fixing the carbon dioxide in the solution.

Patent Literature 2 discloses a method for producing cement mixture. This method includes a slurring step, in which ready-mixed concrete sludge or waste concrete fine powder undergoes heat treatment and then is mixed with water to form a slurry; and a carbonation step, in which carbon dioxide is passed through the slurry to carbonate it.

### CITATION LIST

- Patent Literature

Patent Literature 1: JP 2012-131697 A
Patent Literature 2: JP 2021-138574 A

### SUMMARY OF INVENTION

- Technical Problem

As aforementioned, various methods for fixing carbon dioxide have been developed. In order to achieve a more sufficient $CO_2$ reduction effect, these methods are required to improve the amount and speed of carbon dioxide fixation.

The present invention has been made in view of the above current state of the art and aims to provide a carbon dioxide fixation composition capable of improving the amount and speed of carbon dioxide fixation.

- Solution to Problem

The present inventors have examined various compositions for carbon dioxide fixation. As a result, they found that adding polyamine to a powder containing a calcium-containing compound could improve the amount of carbon dioxide fixation. They also found that adding at least one selected from the group consisting of a secondary amine and a tertiary amine, each having a molecular weight of 600 or less, to a powder containing a calcium-containing compound could improve the speed of carbon dioxide fixation. Thus, the present inventors have arrived at an admirable solution to the above problems and have completed the present invention.

The present invention contains the following carbon dioxide fixation composition and the like.

(1) A carbon dioxide fixation composition containing: a powder containing a calcium-containing compound; and a polyamine.
(2) The carbon dioxide fixation composition according to (1) described above, wherein the polyamine is a polyalkyleneimine.
(3) The carbon dioxide fixation composition according to (1) described above, wherein the polyamine is polyethyleneimine.
(4) The carbon dioxide fixation composition according to (1) or (2) described above, wherein the polyamine has a weight average molecular weight of 600 or more.

(5) A carbon dioxide fixation composition containing: a powder containing a calcium-containing compound; and at least one selected from the group consisting of a secondary amine and a tertiary amine, each having a molecular weight of 600 or less.
(6) The carbon dioxide fixation composition according to (5) described above, wherein the at least one selected from the group consisting of a secondary amine and a tertiary amine includes N-propylethanolamine, isopropylethanolamine, n-butylethanolamine, 2-methylpiperazine, dimethylaminoethanol, 1-dimethylamino-2-propanol, diethylaminoethanol, 3-diethylamino-1-propanol, tetramethylethylenediamine, and pentamethyldiethylenetriamine.
(7) The carbon dioxide fixation composition according to any one of (1) to (6) described above, wherein the powder containing a calcium-containing compound contains at least one selected from the group consisting of a cement, a concrete sludge, and a waste concrete.
(8) A method for fixing carbon dioxide containing passing carbon dioxide through the carbon dioxide fixation composition according to any one of (1) to (7) described above.
(9) The method for fixing carbon dioxide according to (8) described above, wherein the method excludes heat treatment of the powder containing a calcium-containing compound at 100°C to 300°C.
(10) An additive containing at least one selected from the group consisting of a polyamine, a secondary amine having a molecular weight of 600 or less, and a tertiary amine having a molecular weight of 600 or less, the additive being for use in producing the carbon dioxide fixation composition according to any one of (1) to (7) described above.

- Advantageous Effects of Invention

The carbon dioxide fixation composition of the present invention having the above configurations can improve the amount and speed of carbon dioxide fixation and thus contributes to reducing $CO_2$ emissions in the cement industry.
Furthermore, the carbon dioxide fixation composition may be collected and used repeatedly for carbon dioxide fixation.

## DESCRIPTION OF EMBODIMENTS

The following description is offered to specifically illustrate preferred embodiments of the present invention. It should be noted that the present invention is not limited only to these embodiments and the embodiments may be appropriately altered within a range of the gist of the present invention. Any combination of two or more of the following preferred embodiments of the present invention is also a preferred embodiment of the present invention. The matters referring to "the invention" herein are common to both the first and second aspects of the invention.

<Carbon dioxide fixation composition according to first aspect of invention>

A carbon dioxide fixation composition according to a first aspect of the present invention contains: a powder containing a calcium-containing compound; and a polyamine.
The polyamine may be any compound having two or more nitrogen-containing groups selected from the group consisting of a primary amine group, a secondary amine group, a tertiary amine group, a quaternary ammonium group, and an imino group. The polyamine is preferably a compound represented by the following formula (1):

[Chem. 1]

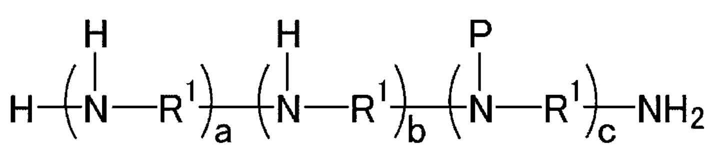

(1)

wherein $R^1$s are the same as or different from each other and are each a C2-C6 linear alkylene group or a C3-C6 branched alkylene group; Ps are the same as or different from each other and are each a hydrogen atom or a structural unit having an additional amino group as a branch; and a, b, and c are the same as or different from each other and are each an integer of 0 or greater, with the sum of a, b, and c being 1 or more.
When P in the formula (1) is a structural unit having an additional amino group, such a structural unit is preferably represented by the following formula (2) and also preferably binds with the structure represented by the formula (1) through the intermediary of $R^1$'s.

[Chem. 2]

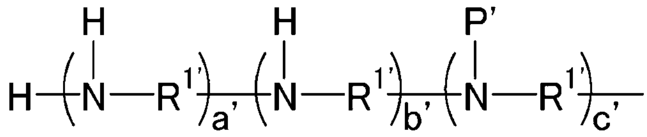

(2)

wherein a', b', c', P', and $R^{1'}$ are the same as a, b, c, P, and $R^1$, respectively, in the formula (1).

Preferred examples of the polyamine include polyethylenepolyamines such as diethylenetriamine, triethylenetetramine, and tetraethylenepentamine; tetrabutylenepentamine, polyethyleneimine, polyamidoamine, polyvinylamine, and polyallylamine, with tetraethylenepentamine and polyethyleneimine being more preferred and polyethyleneimine being still more preferred.

The weight average molecular weight of the polyamine is preferably, but not limited to, 600 or more. The weight average molecular weight of the polyamine is also preferably 1,000,000 or less, more preferably 600 to 100,000, still more preferably 600 to 10,000.

The average molecular weight of the polyamine can be determined by molecular weight measurement (GPC analysis) under the conditions described in the Examples below.

The polyamine in the carbon dioxide fixation composition is preferably contained, but not limited to, in a proportion of 0.1 to 10% by mass relative to 100% by mass of the powder containing a calcium-containing compound. It is more preferably 0.3 to 5.0% by mass, still more preferably 1.0 to 5.0% by mass.

The calcium-containing compound may be any compound containing elemental calcium. Examples thereof include calcium hydroxide, calcium oxide, calcium carbonate, dicalcium silicate, tricalcium aluminate, tetracalcium aluminoferrite, calcium sulfate, calcium nitrate, calcium chloride, calcium phosphate, calcium formate, calcium acetate, and calcium lactate. Preferred are calcium hydroxide and calcium oxide among them.

The powder containing a calcium-containing compound preferably contains 0.01% by mass or more of calcium hydroxide or 5% by mass or more of unhydrated cement, and 20% by mass or less of calcium carbonate. Calcium hydroxide reacts with carbon dioxide to form calcium carbonate, and the greater the amount of unhydrated cement, the more carbon dioxide is adsorbed. Therefore, with these components contained in the above range, the amount of carbon dioxide fixation increases further.

Specific examples of the powder containing a calcium-containing compound include cements such as Portland cements (ordinary, high early strength, ultra high early strength, moderate heat, sulfate-resistant, and low alkaline types thereof); various types of blended cements (blast furnace cement, silica cement, and fly ash cement); white Portland cement; alumina cement; ultra-rapid hardening cements (1-clinker rapid hardening cement, 2-clinker rapid hardening cement, and magnesium phosphate cement); grout cement; oil well cement; low heat cements (low heat blast furnace cement, fly ash-blended low heat blast furnace cement, and belite-rich cement); ultrahigh strength cement; cement-based solidifying materials; and ecocement (cement produced from one or more of municipal solid waste incineration ash and sewage sludge incineration ash as raw materials), hydraulic powder obtained by adding gypsum or fine particles such as blast furnace slag, fly ash, cinder ash, clinker ash, husk ash, silica fume, silica powder, or limestone powder to any of the above cement; concrete sludge, waste concrete, waste mortar, residual concrete, and returned concrete. One of them may be used alone or two or more of them may be used in combination.

The powder containing a calcium-containing compound preferably contains at least one selected from the group consisting of a cement, a concrete sludge, and a waste concrete. The powder is more preferably made from cement and/or waste concrete. When the powder used is a concrete sludge or a waste concrete, the mass ratio of calcium oxide (CaO) to silicon dioxide ($CaO/SiO_2$) in the calcium silicate hydrate, which is a cement hydrate contained in the powder, is preferably high in order to increase the amount of carbon dioxide fixation. Specifically, the mass ratio is preferably 0.5 or more, more preferably 1.0 or more, further preferably 1.5 or more. When the powder contains CaO, carbon dioxide can be fixed as calcium carbonate regardless of the $CaO/SiO_2$ ratio.

The particle size of the powder containing a calcium-containing compound is not limited to, but the maximum particle size is preferably 30 cm or less. It is more preferably 1 cm or less, further preferably 1 mm or less, particularly preferably 500 μm or less.

The powder containing a calcium-containing compound in the carbon dioxide fixation composition is preferably contained in a proportion of 1 to 99.9% by mass based on 100% by mass of the composition. The proportion is more preferably 10 to 99.9% by mass, still more preferably 50 to 99.9% by mass.

It suffices that the carbon dioxide fixation composition contains the powder containing a calcium-containing compound and the polyamine. Preferably, the carbon dioxide fixation composition contains a solvent.

The solvent may be any solvent which allows the calcium-containing compound to react with carbon dioxide. It is preferably water or a solvent mixture of water and an organic solvent.

When the solvent is the mixed solvent, the organic solvent is preferably contained in a proportion of 50% by mass or less based on 100% by mass of the mixed solvent. The proportion is more preferably 20% by mass or less.

Examples of the organic solvent include alcohols such as methyl alcohol, ethyl alcohol, and isopropyl alcohol; aromatic or aliphatic hydrocarbons such as benzene, toluene, xylene, cyclohexane, and n-hexane; ester compounds such as ethyl acetate; ketone compounds such as acetone and methyl ethyl ketone; and cyclic ether compounds such as tetrahydrofuran and dioxane. Among these organic solvents, preferred is a hydrophilic solvent such as alcohol.

The amount of the solvent in the carbon dioxide fixation composition is preferably, but not limited to, 1 to 10,000% by mass relative to 100% by mass of the powder containing a calcium-containing compound. The amount is more preferably 30 to 5,000% by mass, still more preferably 100 to 3,000% by mass.

It suffices that the carbon dioxide fixation composition contains the powder containing a calcium-containing compound and the polyamine. Preferably, the carbon dioxide fixation composition is in slurry form.

<Carbon dioxide fixation composition according to second aspect of invention>

A carbon dioxide fixation composition according to a second aspect of the present invention contains: a powder containing a calcium-containing compound; and at least one selected from the group consisting of a secondary amine and a tertiary amine, each having a molecular weight of 600 or less.

The carbon dioxide fixation composition according to the second aspect of the present invention is the same as that of the first aspect of the present invention except that it contains at least one selected from the group consisting of a secondary amine and a tertiary amine, each having a molecular weight of 600 or less, instead of polyamine.

The secondary amine and the tertiary amine may be any amine having a molecular weight of 600 or less. Examples of these amines include N-methyl ethanolamine, N-ethylethanolamine, N-propyl ethanolamine(2-(propylamino)ethanol), isopropyl ethanolamine(2-(isopropylamino)ethanol), n-butyl ethanolamine(2-(butylamino)ethanol), 2-methylpiperazine, 2-dimethylaminoethanol, 1-dimethylamino-2-propanol, diethylaminoethanol, 3-diethylamino-1-propanol, N,N,N',N'-tetramethylethylenediamine, N-ethyldiethanolamine, triisopropanolamine, N-methyldiethanolamine, t-butyldiethanolamine, and N,N,N',N",N"-pentamethyldiethylenetriamine.

The secondary amine and the tertiary amine may each contain a functional group such as a hydroxy group Preferably, the number of functional groups is one or less per molecule, and more preferably, the number of hydroxy groups is one or less per molecule.

Examples of the secondary amine and the tertiary amine preferably include N-propylethanolamine, isopropylethanolamine, n-butylethanolamine, 2-methylpiperazine, 2-dimethylaminoethanol, 1-dimethylamino-2-propanol, diethylaminoethanol, 3-diethylamino-1-propanol, N,N,N',N'-tetramethylethylenediamine, N,N,N',N",N"-pentamethyldiethylenetriamine, and N-ethylethanolamine, with N-propylethanolamine, isopropylethanolamine, 2-dimethylaminoethanol, 1-dimethylamino-2-propanol, diethylaminoethanol, 3-diethylamino-1-propanol, N,N,N',N'-tetramethylethylenediamine, and N,N,N',N",N"-pentamethyldiethylenetriamine being more preferred.

The molecular weights of the secondary amine and the tertiary amine are not limited as long as they are 600 or less. The molecular weights are preferably 500 or less, more preferably 300 or less, still more preferably 250 or less, particularly preferably 200 or less. The molecular weights are preferably 70 or more.

The carbon dioxide fixation composition preferably contains the total of the secondary amine and the tertiary amine, but not limited to, in a proportion of 0.01 to 20% by mass relative to 100% by mass of the powder containing a calcium-containing compound. The proportion is more preferably 0.1 to 10% by mass, still more preferably 0.5 to 5.0% by mass.

<Method for fixing carbon dioxide>

The carbon dioxide fixation composition of the present invention can be suitably used for carbon dioxide fixation.

The present invention also provides a method for fixing carbon dioxide including passing carbon dioxide through the carbon dioxide fixation composition of the present invention (hereafter also referred to as "carbonation step").

In the method for fixing carbon dioxide, a carbon dioxide fixation composition may be used which has the same preferred form as the carbon dioxide fixation composition of the present invention.

The carbonation step may be any step of passing carbon dioxide through the carbon dioxide fixation composition. The step preferably includes bringing the carbon dioxide fixation composition in slurry form into contact with carbon dioxide.

The air flow rate of the carbon dioxide is preferably, but not limited to, 5 cc/min or greater for 1 g of the powder containing a calcium-containing compound. Such a rate can further improve the amount and speed of carbon dioxide fixation. The air flow rate of the carbon dioxide is more preferably 10 cc/min or greater, still more preferably 20 cc/min or greater for 1 g of the powder containing a calcium-containing compound. The rate is also preferably 100 cc/min or less for 1 g of the powder containing a calcium-containing compound.

In the carbonation step, the duration of passing carbon dioxide is preferably, but not limited to, 0.01 to 24 hours. It is more preferably 0.01 to 7 hours, still more preferably 0.5 to 4 hours.

In the carbonation step, passing carbon dioxide is preferably performed until the pH of the carbon dioxide fixation composition reaches 10 or less. Such a procedure can further increase the amount of carbon dioxide fixation. Passing carbon dioxide is more preferably performed until the pH reaches 9 or less, still more preferably 8 or less.

The method for fixing carbon dioxide may be any method that includes the carbonation step. In the case where the powder containing a calcium-containing compound in the carbon dioxide fixation composition is, for example, in lump form, the method may include crushing the lump of powder before the carbonation step.

The method for crushing the lump of powder may be any method using common pulverizers at cement plants such as a hammer crusher, a roll crusher, a jaw crusher, a vertical mill, a ball mill, a rod mill, and a disk mill.

The method for fixing carbon dioxide preferably excludes heat treatment of the powder containing a calcium-containing compound in the carbon dioxide fixation composition at 100°C to 300°C. Yet, the heat treatment excludes calcining clinker materials while producing the powder containing a calcium-containing compound.

In the method for fixing carbon dioxide, calcium carbonate is produced by passing carbon dioxide through the carbon dioxide fixation composition.

The present invention encompasses a method for producing calcium carbonate, which includes passing carbon dioxide through the carbon dioxide fixation composition of the present invention.

The present invention further encompasses a method for producing carbon-dioxide-fixed concrete, which includes passing carbon dioxide through the carbon dioxide fixation composition of the present invention.

<Additives for producing carbon dioxide fixation compositions>

The polyamine in the carbon dioxide fixation composition according to the first aspect of the present invention, and the secondary amine and tertiary amine, each having a molecular weight of 600 or less, in the carbon dioxide fixation composition according to the second aspect of the present invention can be suitably used as additives for producing a carbon dioxide fixation composition.

The present invention also provides an additive containing at least one selected from the group consisting of a polyamine, a secondary amine having a molecular weight of 600 or less, and a tertiary amine having a molecular weight of 600 or less, the additive being for use in producing the carbon dioxide fixation composition.

The polyamine, secondary amine having a molecular weight of 600 or less, and tertiary amine having a molecular weight of 600 or less contained in the additive of the present invention are as described for the carbon dioxide fixation composition of the present invention.

## EXAMPLES

The present invention is described in more detail below with reference to examples, but the present invention is not limited to these examples. It should be noted that the term "%" refers to "mass%" unless otherwise stated.

The molecular weight of the polyamine was measured as described below.

(Measurement of molecular weight (GPC analysis))

Herein, the weight average molecular weight and the number average molecular weight can be determined by a known method such as gel permeation chromatography (GPC) using pullulan as a standard material. The measurement by the GPC was performed under the following measurement conditions.

Measurement apparatus: Available from Shimadzu Corporation
Column used: SHODEX OHpak SB-807HQ (two columns) + SB-806M/HQ (two columns), available from Showa Denko K.K.
Eluent: An aqueous solution adjusted to contain 0.5 mol% sodium nitrate and 0.5 mol% acetic acid
Standard material: Pullulan P-82, available from Wako Pure Chemical Industries, Ltd. Detector: Differential refractometer, available from Shimadzu Corporation
Flow rate: 0.4 ml/min

(Experimental apparatus/procedures)

An additive (a polyamine, a secondary amine, or a tertiary amine) and water were added to crushed cement or crushed simulated waste concrete in a vessel to prepare a composition. Carbon dioxide was passed through the composition at room temperature for a predetermined period of time. Then, the composition was filtered to collect

powder, followed by drying. The weight loss rate of the resulting powder was determined using TG-DTA equipment (Name of the equipment: STA200, available from Hitachi High-Tech Corporation) to calculate the amount of calcium carbonate produced, thereby determining the carbonation rate. The details are described below.

Cement: Unhydrated cement (ordinary Portland cement)
Preparation of simulated crushed waste concrete:
A cement paste having a ratio of "w/c = 0.4" was prepared (kneading was performed by the method in conformity with JIS R5201). The kneaded paste was filled into a mold (φ 50 × 50 × 100 mm) and air-cured at 20°C for three days. Three days after adding water thereto, the workpiece was removed from the shuttering, followed by an 11-day water-curing. After curing, the cured body was crushed and then sieved through a 100 μm-aperture sieve to collect powder having a size of 100 μm or smaller for the test.
Method for blowing $CO_2$:
The powder was added to ion-exchanged water at the ratio of "w/b = 10" (W: additive and water; B: crushed cement or crushed waste concrete), followed by mixing with a stirring rod at constant speed. When using an additive, it was added to ion-exchanged water. The amount of polyamine added was 0.3, 1.0 or 5.0 wt%/B while the amount of primary amine, secondary amine, or tertiary amine added was 0.1, 1.0 or 5.0 wt%/B. At room temperature, carbon dioxide gas (available from Sumitomo Seika Chemicals Company, Limited.) was passed through the resulting slurry at a flow rate of 0.3 L/min for the predetermined time, followed by filtration. The resulting powder was washed with acetone and then dried at 40°C (under a nitrogen atmosphere) for 24 hours, followed by the measurement with TG-DTA.

(Measurement of amount of calcium carbonate)

The amount of calcium carbonate was determined quantitatively by the following method with TG-DTA.

Conditions: Temperature-increasing rate: 20°C/min; The measurement was performed under a nitrogen atmosphere
Analysis: The amount of mass reduction at about 600°C to 800°C determined by TG-DTA was identified as the amount of decarboxylation of the calcium carbonate, thereby calculating the amount of calcium carbonate. The carbonation rate was calculated as described below, with a 100% carbonation rate defined as the point at which all the calcium oxide in the cement or waste concrete had reacted with carbon dioxide.

In order to quantitatively measure the amount of calcium oxide in the powder, the chemical composition of the crushed cement or crushed waste concrete was analyzed in conformity with JIS R 5202:2015 and JIS R 5204:2019 (Chemical analysis method of cement by X-ray fluorescence) using an X-ray fluorescence analysis apparatus (Name of apparatus: ZSX Primus II, available from Rigaku Holdings Corporation) to determine the mass fraction of elemental calcium. The mass fraction of calcium oxide was calculated based on that value. The results are shown in Table 1. Here, the mass fraction of elemental calcium and the mass fraction of calcium oxide in the crushed waste concrete were calculated, with corrections based on the ignition loss determined separately by TG-DTA.

[Table 1]

| mass% | Ca | CaO |
|---|---|---|
| Cement | 41.0 | 57.4 |
| Simulated waste concrete | 33.3 | 46.6 |

(Formula of carbonation rate)

Symbols and units are shown in the parentheses () and [] respectively.

Maximum amount of carbon dioxide fixation (A)[g] = Amount of calcium oxide in a 1 g powder (B)[g] × m/n

m: Molecular weight of carbon dioxide [g/mol]
n: Molecular weight of calcium oxide [g/mol]

$$\text{Maximum weight loss rate (C)} = (A)/(1 + (A)) \times 100\ [\%]$$

$$\text{Carbonation rate (D)} = \text{weight loss rate}/(\text{C}) \times 100\ [\%]$$

Note: Weight loss rate = amount of mass reduction at about 600°C to 800°C determined by TG-DTA

The improved rate in carbonation (E) of the specimen is shown below, with a 100% carbonation rate defined as the carbonation rate without additives (D0).

$$(\text{E}) = \text{Carbonation rate of specimen (D1)}/(\text{D0}) \times 100\ [\%]$$

Examples (1) to (6) and Comparative Examples (1) and (2)

As shown in Table 2 below, using polyamines and a primary amine as additives, the carbonation rates were determined after the predetermined times (30 min, 1 h, and 4 h) with the above experimental apparatuses and procedures. The results are shown in Table 2. In addition, the carbonation rates were listed as a ratio relative to the carbonation rate of the additive-free example. The final degrees of the carbonation (the amount of carbon dioxide fixation) were determined based on the carbonation rates measured after one hour. Here, an example capable of improving the carbonation rate by 10% or more compared to the additive-free example is evaluated as having particularly excellent effect on enhancing the carbonation rate.

[Table 2]

| | Additive | Molecular weight of additive Mw | Powder | Amount added | | | | | | | | |
|---|---|---|---|---|---|---|---|---|---|---|---|---|
| | | | | 0.3 wt%/C | | | 1.0 wt%/C | | | 5.0 wt%/C | | |
| | | | | Carbonation rate | | | | | | | | |
| | | | | After 30 min | After 1 h | After 4 h | After 30 min | After 1 h | After 4 h | After 30 min | After 1 h | After 4 h |
| Example (1) | Polyethyleneimine (Nippon Shokubai Co., Ltd., SP-006) | 898 | cement | 82.10% | 111.30% | - | 93.18% | 136.73% | 166.00% | 72.60% | 108.00% | 167.00% |
| Example (2) | Polyethyleneimine (Nippon Shokubai Co., Ltd., SP-018) | 2146 | cement | 72.70% | 112.10% | - | 81.82% | 134.69% | 164.00% | 62.50% | 106.20% | 164.00% |
| Example (3) | Polyethyleneimine (Nippon Shokubai Co., Ltd., SP-003) | 542 | cement | - | - | - | 93.02% | 114.29% | - | - | - | - |
| Example (4) | Tetraethylenepentamine (SIGMA-ALDRICH, T11509) | 189 | cement | - | - | - | 95.35% | 114.29% | - | - | - | - |
| Example (5) | Polyethyleneimine (Nippon Shokubai Co., Ltd., SP-200) | 14461 | cement | - | - | - | 79.50% | 130.40% | 158.00% | - | - | - |
| Example (6) | Polyethyleneimine (Nippon Shokubai Co., Ltd., P-1000) | 249932 | cement | - | - | - | 81.80% | 130.40% | - | - | - | - |
| Comparative Example (1) | Additive-free | - | cement | 100.00% | 100.00% | 100.00% | 100.00% | 100.00% | 100.00% | 100.00% | 100.00% | 100.00% |
| Comparative Example (2) | 2-Aminoethanol (Tokyo Chemical Ind. Co., Ltd., A0297) | 61 | cement | 82.00% | 86.50% | - | 106.30% | 93.88% | - | 104.00% | 92.50% | - |

Examples (7) to (17) and Comparative Examples (3) to (6)

Using primary amines, secondary amines, and tertiary amines as shown in Table 3, the carbonation rates were determined after 30 minutes with the above experimental apparatuses and procedures. The results are shown in Table 3. The durations of carbon dioxide blowing and stirring were each 30 minutes. The carbonation rates were listed as a ratio relative to the carbonation rate of the additive-free example. Here, an example capable of improving the carbonation rate after 30 minutes by 10% or more compared to the additive-free example is evaluated as having particularly excellent effect on enhancing the carbonation speed.

[Table 3]

| | Additive | Molecular weight of additive | Carbonation rate after 30 min | | | | | |
|---|---|---|---|---|---|---|---|---|
| | | | Cement-based | | | Waste concrete-based | | |
| | | | Amount of additive (wt%/C) | | | | | |
| | | | 0.1 | 1.0 | 5.0 | 0.1 | 1.0 | 5.0 |
| Example (7) | 2-(Propylamino)ethanol (Tokyo Chemical Ind. Co., Ltd., P2743) | 103.2 | - | 131.10% | 137.80% | - | 117.50% | - |
| Example (8) | 2-(Isopropylamino)ethanol (Tokyo Chemical Ind. Co., Ltd., I0227) | 103.2 | - | 124.80% | - | 110.20% | 120.40% | - |
| Example (9) | 2-(Butylamino)ethanol (Tokyo Chemical Ind. Co., Ltd., B1023) | 117.2 | - | 124.90% | - | - | 100.90% | 108.10% |
| Example (10) | 2-Methylpiperazine (Tokyo Chemical Ind. Co., Ltd., P0881) | 213.3 | - | 123.50% | - | - | 103.50% | 110.80% |
| Example (11) | 2-Dimethylaminoethanol (FUJIFILM Wako Pure Chemical Corp., 049-02693) | 89.1 | - | 122.30% | - | - | 120.70% | - |
| Example (12) | 1-Dimethylamino-2-propanol (Tokyo Chemical Ind. Co., Ltd., D0660) | 103.2 | 112.10% | 131.40% | 139.00% | - | 113.50% | - |
| Example (13) | Diethylaminoethanol (Tokyo Chemical Ind. Co., Ltd., D0465) | 117.2 | | 122.30% | | | 112.40% | - |
| Example (14) | 3-Diethylamino-1-propanol (Tokyo Chemical Ind. Co., Ltd., D0472) | 131.2 | - | 115.50% | 120.30% | | 114.50% | - |
| Example (15) | N,N,N',N'-Tetramethylethylenediami ne (Tokyo Chemical Ind. Co., Ltd., T0147) | 119.2 | 111.90% | 128.80% | 135.70% | 112.50% | 131.40% | - |
| Example (16) | N,N,N',N",N"-Pentamethyldiethylenetriamine (Tokyo Chemical Ind. Co., Ltd., P0881) | 173.3 | - | 116.70% | - | - | 116.60% | - |
| Example (17) | N-Ethylethanolamine (Tokyo Chemical Ind. Co., Ltd., E0057) | 89.1 | - | 113.00% | - | - | 108.20% | 115.20% |
| Comparative Example (3) | N/A | - | 100.00% | 100.00% | 100.00% | 100.00% | 100.00% | 100.00% |
| Comparative Example (4) | 2-Aminoethanol (Tokyo Chemical Ind. Co., Ltd., A0297) | 61.1 | - | 106.30% | - | - | 82.10% | - |

(continued)

| | Additive | Molecular weight of additive | Carbonation rate after 30 min | | | | | |
|---|---|---|---|---|---|---|---|---|
| | | | Cement-based | | | Waste concrete-based | | |
| | | | Amount of additive (wt%/C) | | | | | |
| | | | 0.1 | 1.0 | 5.0 | 0.1 | 1.0 | 5.0 |
| Comparative Example (5) | DL-1-Amino-2-propanol (Tokyo Chemical Ind. Co., Ltd., A1229) | 75.1 | - | 98.50% | - | - | 90.70% | - |
| Comparative Example (6) | 3-Amino-1-propanol (Tokyo Chemical Ind. Co., Ltd., A0438) | 75.1 | - | 102.20% | - | - | 99.50% | - |

**Claims**

1. A carbon dioxide fixation composition comprising:

   a powder containing a calcium-containing compound; and
   a polyamine.

2. The carbon dioxide fixation composition according to claim 1,
   wherein the polyamine is a polyalkyleneimine.

3. The carbon dioxide fixation composition according to claim 1,
   wherein the polyamine is polyethyleneimine.

4. The carbon dioxide fixation composition according to claim 1 or 2,
   wherein the polyamine has a weight average molecular weight of 600 or more.

5. A carbon dioxide fixation composition comprising:

   a powder containing a calcium-containing compound; and
   at least one selected from the group consisting of a secondary amine and a tertiary amine, each having a molecular weight of 600 or less.

6. The carbon dioxide fixation composition according to claim 5,
   wherein the at least one selected from the group consisting of a secondary amine and a tertiary amine includes N-propylethanolamine, isopropylethanolamine, n-butylethanolamine, 2-methylpiperazine, dimethylaminoethanol, 1-dimethylamino-2-propanol, diethylaminoethanol, 3-diethylamino-1-propanol, tetramethylethylenediamine, and pentamethyldiethylenetriamine.

7. The carbon dioxide fixation composition according to any one of claims 1 to 6,
   wherein the powder containing a calcium-containing compound contains at least one selected from the group consisting of a cement, a concrete sludge, and a waste concrete.

8. A method for fixing carbon dioxide comprising passing carbon dioxide through the carbon dioxide fixation composition according to any one of claims 1 to 7.

9. The method for fixing carbon dioxide according to claim 8,
   wherein the method excludes heat treatment of the powder containing a calcium-containing compound at 100°C to 300°C.

10. An additive comprising at least one selected from the group consisting of a polyamine, a secondary amine having a molecular weight of 600 or less, and a tertiary amine having a molecular weight of 600 or less,
    the additive being for use in producing the carbon dioxide fixation composition according to any one of claims 1 to 7.

**INTERNATIONAL SEARCH REPORT**

International application No.
**PCT/JP2024/001803**

**A. CLASSIFICATION OF SUBJECT MATTER**

***B01D 53/14***(2006.01)i; ***B01D 53/62***(2006.01)i; ***C01B 32/50***(2017.01)i
FI: B01D53/14 210; C01B32/50; B01D53/62

According to International Patent Classification (IPC) or to both national classification and IPC

**B. FIELDS SEARCHED**

Minimum documentation searched (classification system followed by classification symbols)

B01D53/14; B01D53/02; B01D53/62; B01J20/00; B09B3/00; C01B32/50; C01F11/18; C02F11/00; C04B

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2012-504043 A (NEUMANN SYSTEMS GROUP, INC.) 16 February 2012 (2012-02-16) claims 1, 4, paragraphs [0020], [0023]-[0024] | 1-10 |
| Y | WO 2010/093092 A1 (POSTECH ACADEMY-INDUSTRY FOUNDATION) 19 August 2010 (2010-08-19) claims 1-2, paragraphs [0021]-[0022], [0044]-[0048], [0055], table 2 | 1-4, 7-10 |
| Y | JP 2009-518281 A (BASF SE) 07 May 2009 (2009-05-07) paragraphs [0026], [0061]-[0062], table 1 | 5-10 |
| A | KR 10-2013-0047256 A (KOREA ELECTRIC POWER CORPORATION) 08 May 2013 (2013-05-08) entire text, all drawings | 1-10 |
| A | JP 2022-541560 A (ARELAC, INC.) 26 September 2022 (2022-09-26) entire text, all drawings | 1-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 March 2024** | **09 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
PCT/JP2024/001803

C. DOCUMENTS CONSIDERED TO BE RELEVANT

| Category* | Citation of document, with indication, where appropriate, of the relevant passages | Relevant to claim No. |
|---|---|---|
| A | JP 2021-504180 A (SAUDI ARABIAN OIL CO.) 15 February 2021 (2021-02-15)<br>entire text, all drawings | 1-10 |
| A | JP 2015-529156 A (BLUE PLANET, LTD.) 05 October 2015 (2015-10-05)<br>entire text, all drawings | 1-10 |
| A | JP 2021-138574 A (TAIHEIYO CEMENT CORPORATION) 16 September 2021 (2021-09-16)<br>entire text, all drawings | 1-10 |
| A | JP 2012-131697 A (NIHON UNIVERSITY) 12 July 2012 (2012-07-12)<br>entire text, all drawings | 1-10 |
| A | JP 2022-190667 A (TOSOH CORP.) 26 December 2022 (2022-12-26)<br>entire text | 1-10 |
| A | JP 2008-30983 A (NIPPON SHOKUBAI CO., LTD.) 14 February 2008 (2008-02-14)<br>entire text | 1-10 |
| A | JP 2006-272047 A (SUMITOMO OSAKA CEMENT CO., LTD.) 12 October 2006 (2006-10-12)<br>entire text | 1-10 |

Form PCT/ISA/210 (second sheet) (July 2022)

**INTERNATIONAL SEARCH REPORT**
**Information on patent family members**

International application No.
**PCT/JP2024/001803**

| Patent document cited in search report | Publication date (day/month/year) | Patent family member(s) | Publication date (day/month/year) |
|---|---|---|---|
| JP 2012-504043 A | 16 February 2012 | US 2010/0092368 A1<br>claims 1, 4, paragraphs [0038], [0041]-[0042]<br>WO 2010/037040 A1<br>CN 102215938 A<br>KR 10-2011-0091655 A<br>EP 2358463 A1 | |
| WO 2010/093092 A1 | 19 August 2010 | KR 10-2010-0092306 A | |
| JP 2009-518281 A | 07 May 2009 | US 2009/0211447 A1<br>paragraphs [0030], [0065]-[0066], table 1<br>WO 2007/068695 A1<br>EP 1971413 A1 | |
| KR 10-2013-0047256 A | 08 May 2013 | (Family: none) | |
| JP 2022-541560 A | 26 September 2022 | US 2021/0017035 A1<br>entire text, all drawings<br>WO 2021/016200 A1<br>EP 3999215 A1<br>KR 10-2022-0035153 A<br>CN 114430697 A | |
| JP 2021-504180 A | 15 February 2021 | US 2019/0168417 A1<br>entire text, all drawings<br>WO 2019/108263 A1<br>EP 3717193 A1<br>CN 111344127 A<br>KR 10-2020-0092319 A | |
| JP 2015-529156 A | 05 October 2015 | US 2014/0234946 A1<br>entire text, all drawings<br>WO 2014/039578 A1<br>EP 2892635 A1<br>CN 104812466 A | |
| JP 2021-138574 A | 16 September 2021 | (Family: none) | |
| JP 2012-131697 A | 12 July 2012 | (Family: none) | |
| JP 2022-190667 A | 26 December 2022 | (Family: none) | |
| JP 2008-30983 A | 14 February 2008 | (Family: none) | |
| JP 2006-272047 A | 12 October 2006 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012131697 A
- JP 2021138574 A